# EUROPÄISCHE PATENTANMELDUNG

(11) **EP 2 674 746 A1**
(43) Veröffentlichungstag der Anmeldung: **18.12.2013**
(21) Anmeldenummer: 12171733.4
(22) Anmeldetag: 13.06.2012
(51) Int. Cl.: G01N 21/84, G01N 21/88, G01N 15/14

(54) **Vorrichtung und Verfahren zur optischen Qualitätskontrolle der Beschichtung bzw. Befleckung eines körnigen Substrats**

(71) Anmelder: Bayer CropScience AG, 40789 Monheim am Rhein (DE)
(72) Erfinder: Die Erfindernennung liegt noch nicht vor

(57) **Zusammenfassung**

Die Erfindung betrifft eine Vorrichtung und ein Verfahren zur optischen Qualitätskontrolle der Beschichtung bzw. Befleckung eines körnigen Substrats, insbesondere Saatgut mit einem farb- und kontrastintensiven Beschichtungsmittel. Die Vorrichtung umfasst eine tragbare Videoeinheit mit einer Farbvideokamera (2), ein lichtdicht abgeschlossenes Gehäuse (1) und eine Bildanalyseeinheit (nicht gezeigt), die mit der Videoeinheit verbunden ist und, in der ein Computerprogramm zur Farbverteilungsanalyse der farbigen Bildaufnahme installiert ist. Beim Verfahren wird das farbige Bild einer Substratprobe bestehend aus mehreren dicht aneinander liegenden Körnern auf die Farbenverteilung individueller Körner analysiert.

## Beschreibung

Die Erfindung betrifft eine Vorrichtung und ein Verfahren zur optischen Qualitätskontrolle der Beschichtung bzw. Befleckung eines körnigen Substrats, insbesondere Saatgut mit einem farb- und kontrastintensiven Beschichtungsmittel.

Bei der Saatgutbeizung ist neben der aufgebrachten Menge des Beizmittels (Beizgrad) auch die homogene Verteilung des aufgebrachten Beizmittels, die sogenannte Korn-zu-Korn Verteilung ein wesentlicher Qualitätsfaktor. Hierbei sind wiederum zu unterscheiden:
- Die Verteilung des Beizmittels auf dem Einzelkorn,
- Die Verteilung des Beizmittels zwischen den Körner (Korn-zu-Korn Verteilung).

Die Verteilung des Beizmittels zwischen den Körnern im Stand der Technik erfolgt durch nasschemisches extrahieren und quantitative Messung (z. B mittels HPLC).

Die Verteilung des Beizmittels auf dem Einzelkorn wird im Stand der Technik mittels optischer Detektion über Farbemessung (z.B. gelbes Getreide - rotes Beizmittel) auf einzelnen Körnern aus einer herausgenommenen Probe ermittelt.

Die Qualitätskontrolle ist entsprechend ein aufwändiger Prozess, der ein Analyselabor beschäftigt. Es besteht daher Bedarf nach einem Mittel zur Vereinfachung der Qualitätskontrolle und Bestimmung der Verteilung eines farb- und kontrastintensiven Beizmittels auf dem Einzelkorn und zwischen den Körnern anhand einer vorgegebenen Probe.

Die Aufgabe wurde durch eine Vorrichtung und eine Methode gelöst, wobei die Detektion der Verteilung des farb- und kontrastintensiven Beizmittels mittels optischer Farbmessung. (Beispiel: Gelbes Getreide - rotes Beizmittel) einer mit einem farb- und kontrastintensiven Beschichtungsmittel beschichteten Substratprobe bestehend aus mehreren dicht aneinander liegenden (= nicht vereinzelten) Körnern statistisch erfolgt.

Instrumente zur Aufnahme eines Farbbilds einer Saatgutprobe sind aus dem Stand der Technik bekannt. Z. B. der Farbscanner-Technologie-basierte Kornzähler iXeed Counter der Firma Hoopmann, ein Tischinstrument, der das Zählen, die Ermittlung des 1000-Körner-Gewichts und die weitere Charakterisierung einer Probe anhand eines Farbbilds einer Saatgutprobe ermittelt. Hierfür wird die Saatgutprobe auf eine Glasplatte verteilt und ein Farbbild wird mittels eines integrierten Farbscanners aufgenommen. Das Farbbild wird in einer Analyseeinheit gespeichert und ausgewertet (http://www.hoopman-equipment.nl/imagesl/pdf/20091104_IXEED_COUNTER.pdf). Die Nutzung des mit dem iXeed Counter erhaltenen Farbbilds für die Ermittlung der Beizungsqualität der Saatgutprobe ist nicht beschrieben. Es ist zu vermuten, dass das mit Hilfe des Scanners erhaltene Bild nicht von ausreichender Qualität ist, um eine ausführliche Farbanalyse zu ermöglichen.

Die erfindungsgemäße Vorrichtung umfasst eine tragbare Videoeinheit zur farbigen Bildaufnahme einer Substratprobe bestehend aus mehreren dicht aneinander liegenden Körnern, verbunden mit einer Bildanalyseeinheit in der ein Computerprogramm zur Farbverteilungsanalyse der farbigen Bildaufnahme installiert ist. Die Videoeinheit umfasst erfindungsgemäß eine Farbvideokamera sowie Leuchtmittel, die an einem um die Videokamera lichtdicht abgeschlossenen Gehäuse mit einem Aufnahmefenster befestigt sind, wobei die Videokamera auf das Aufnahmefenster des Gehäuses gerichtet ist.

Das Gehäuse bildet eine Bildaufnahmekammer, die ausschließlich von den Leuchtmitteln für die Bildaufnahme beleuchtet wird. Das Gehäuse kann rund oder eckig, bevorzugt eckig sein.

Das Objektiv der Videokamera befindet sich vorzugsweise perpendikular zur und auf die Substratoberfläche gerichtet.

Für die Farbaufnahme wird die Videoeinheit über der Oberfläche des körnigen Substrats (z. B. in einem offenen Behälter voller körnigen Substrats) positioniert.

Die übliche Distanz zwischen Objektiv und Substratoberfläche beträgt üblicherweise von 80 bis 150 mm, bevorzugt ca. 100 mm und die Leuchtmittel beleuchten eine Fläche von vorzugsweise 40x40mm bis 150 x 150 mm bevorzugt 40x40 mm bis 100x100 mm, besonders bevorzugt ca.75x45 mm.

Die erfindungsgemäße Vorrichtung erfordert nicht, dass das zu überprüfende Saatgut in einzelne Körner vereinzelt wird, sondern misst die Substratprobe in ihrer Gesamtheit. Dadurch wird eine besondere Vorbereitung der zu überprüfenden Saatgutprobe vermieden.

In einer besonderen Ausführungsform der Vorrichtung wird die Substratprobe in eine dimensionierte Schale eingebracht, die dann in einem Schalenaufnahmeelement als weiteres Element der Videoeinheit mit einer festlegbaren Distanz zur Videokamera befestigt wird. Das Gehäuse wird üblicherweise auf das Schalenaufnahmeelement positioniert. Dies garantiert die Einhaltung der vorgeschriebenen Distanz zwischen Videokamera und Substrat. Auch die Bildaufnahmekammer wird in dieser Ausführungsform von externen Lichtquellen besonders gut isoliert. Typischerweise wird für die Qualitätskontrolle der Beschichtungsqualität bei Getreide wie Weizen eine kommerzielle erhältliche Schale der Größe 76x46 mm verwendet, in der je nach Größe sich zwischen 100 und 300 Körner befinden, ohne sich darauf zu begrenzen.

Die Videoeinheit ist als mobile Einheit konzipiert und kann mit Hilfe des Gehäuses auch direkt auf jede Saatgutprobe (z.B. im Saatgutsack) aufgelegt werden.

Als Farbvideokamera wird eine farb- und kontrastempfindliche Kamera verwendet. Bevorzugt wird eine möglichst kompakte Einplatinen-USB-Farbvideokamera in die Videoeinheit integriert. Für eine optimale Integration wird eine Videokamera ohne Objektivhalter bevorzugt, die mit einer Objektivfassung und einem geeigneten Objektiv in die Videoeinheit platzsparend integriert wird. Z. B. ist eine Einplatinen-USB-Kamera der Firma IDS GmbH, Modell uEye UI-1248LE-C mit einer Kunststoff-Objektivfassung zur Aufnahme eines M12 Objektivs Typ B5M8430N von Lensation besonders geeignet. Vorzugsweise ermöglicht die Objektivfassung eine Fokussierung auf kurzer Distanz.

Vorzugsweise umfassen die Leuchtmittel eine oder mehrere Leuchtdioden insbesondere LED Platinen als Lichtquellen.

In einer bevorzugten Ausführungsform weisen die Leuchtmittel eine Hauptplatine verbunden mit einer oder mehreren Diodenplatinen zum Anschluss von Leuchtdioden auf.

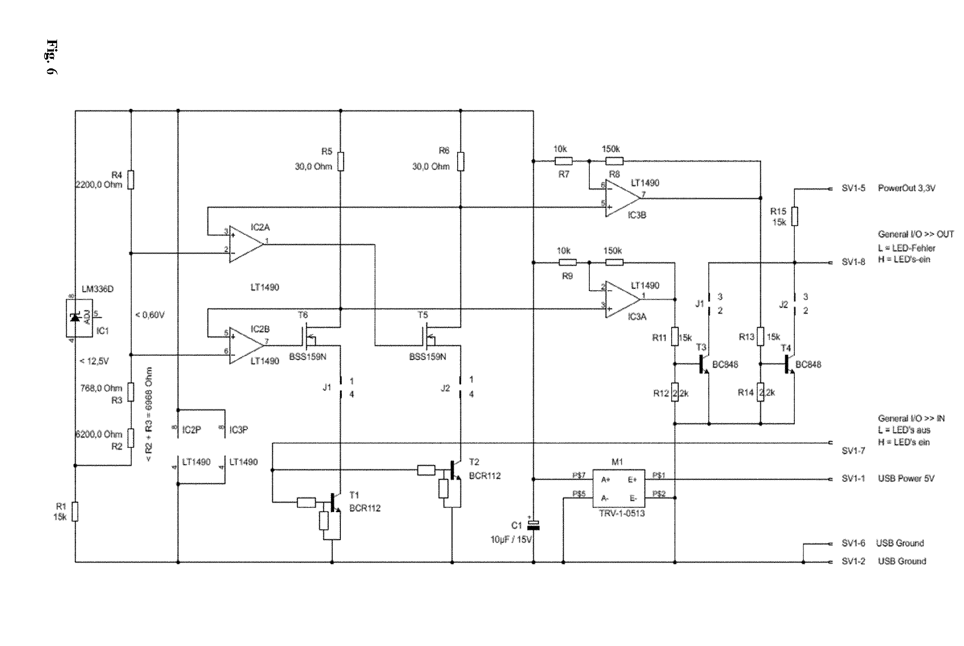

In der Hauptplatine dient eine Kontaktleiste zur Verbindung mit der Farbvideokamera, die gleichzeitig auch als Stromversorgung für die Diodenplatinen und die angeschlossenen Leuchtdioden Verwendung findet. Auf der Kamera werden verfügbare USB-IO Ein-/Ausgänge in Verbindung mit der Platinen-Schaltung zum softwareseitigen Ein- und Ausschalten der Leuchtdioden verwendet. Die Kamera selbst wird üblicherweise auf der Hauptplatine geschraubt. Fig. 6 zeigt den Schaltplan der Hauptplatine und deren Bauteilliste.

Die Diodenplatinen werden mit dem Stand der Technik üblichen Aufbau zur Aufnahme von üblicherweise je zwei Leuchtdioden bereitgestellt. Beispielsweise dienten als Basismaterial Lochrasterplatinen Typ "Laborkarte RP2 Phenolhartpapier", hergestellt von der Firma Rademacher. Die Bearbeitung erfolgte durch Sägen in der gewünschten Größe, auflöten von je zwei Leuchtdioden und Verbindungskabel und Versiegelung mit Isolierlack.

Als Lichtquelle werden üblicherweise leuchtstarke weiße Leuchtdioden mit einer Lichtstärke von 5000 bis 30000 mcd wie z. B. Leuchtdioden von Nichia, Typ NSPW310DS, Lichtstärke Iv 6800 mcd verwendet. Typischerweise werden je zwei Dioden auf jeder Diodenplatine in Serie gelötet, der Gesamtstrom ist durch die Schaltung der Hauptplatine auf max. 2 x 20 mA beschränkt.

Für eine optimale Ausleuchtung des Substrats werden die Lichtquellen vorzugsweise unterhalb der Videokamera seitlich innerhalb des Gehäuses montiert.

Zur Minimierung von Reflexionen auf der Substratoberfläche wird die Substratoberfläche vorzugsweise ausschließlich indirekt beleuchtet. Hierfür weist die erfindungsgemäße Vorrichtung eine reflektierende Fläche und eine oder mehrere Lichtquelle auf.

In einer bevorzugten Ausführungsform der Vorrichtung besteht die reflektierende Fläche aus einem vom Innen der Bildaufnahmekammer aus konkaven matt-weiß beschichteten Reflektor, mit einer zentralen Bohrung für das Objektiv der Kamera und vorzugsweise seitlichen Bohrungen für die Leuchtmittel.

Üblicherweise ist der Reflektor aus dünnem Metallblech gefertigt und weist die Form eines halbzylindrischen Doms auf, wobei das Innere des Doms matt-weiß beschichtet ist. Alternativ ist der Reflektor halbkugelförmig oder weist die Form eines Tunnels auf. Bevorzugt wird ein kugeldomförmiger Reflektor. Typischerweise beträgt die Wölbung des Reflektors 120 bis 200 Grad, bevorzugt 120 bis 180, besonders bevorzugt 180 Grad.

Üblicherweise weist der Reflektor vorzugsweise gleichmäßig verteilt auf dem Kreisumfang des Kugeldoms oder auf dem eckigen Querschnitt des Halbzylinders auf gleicher Höhe zur Substratoberfläche zwei bis zehn, bevorzugt vier bis acht vorzugsweise vier seitliche Bohrungen für die gleiche Anzahl von Leuchtdioden auf. Bei vier Leuchtdioden reicht die USB-Verbindung mit der Steuereinheit für die Stromversorgung aus. Typischerweise werden die Leitungen der Dioden mit Schrumpfschlauch bis zur Diodenplatine isoliert, zur Vermeidung von Kurzschlüssen durch Berührung des Metallreflektors.

Als matt-weiße Beschichtung wird üblicherweise eine Bariumsulfat Beschichtungsformulierung (z.B. von der Firma Sphere Optics als Sprühsuspension geliefert) auf das Innere des Doms als reflektierende Fläche des Reflektors aufgetragen. Diese hochreflektive Beschichtung garantiert eine matte und gleichmäßige Ausleuchtung der zu untersuchenden Saatgut Proben.

Zur weiteren Minimierung von Reflexionen auf der Substratoberfläche wird vorzugsweise die dem Substrat gegenüberliegenden Seite (Unterseite) der Lichtquellen lichtabsorbierend beschichtet, z. B. mit einer lichtabsorbierenden Schicht lackiert, die gleichzeitig als Augenschutz für den Anwender dient.

Um eine Verschmutzung der Videokameraoptik zu verhindern befindet sich üblicherweise zwischen Reflektor und Objektiv eine transparenten Platte, üblicherweise eine Acrylglas Platte, die bei Bedarf mit Druckluft (< 0,1 Bar) von außen vorsichtig von Staub gereinigt werden kann.

Alternativ zu den erfindungsgemäßen Reflektor-basierten Leuchtmittel ist auch ein Lichttunnel wie z. B. Xled-TU-Lichttunnel der Firma Planistar Licht GmbH anwendbar mit dem Nachteil, dass ein solches Lichttunnel eine zusätzliche externe Energieversorgung benötigt.

Üblicherweise ist die Bildanalyseeinheit ein Computer auf dem die Software zur Bildanalyse installiert ist. Üblicherweise ist der Computer mit einem USB-Kabel mit der Videoeinheit verbunden.

Es wurde festgestellt, dass Reflektor-basierte Leuchtmittel mit vier Leuchtdioden in einer Beleuchtungskammer eine Beleuchtungsqualität liefert, die die Farbanalyse eines in der Beleuchtungskammer aufgenommenen Farbbildes ermöglicht. Für die Stromversorgung dieser Videoeinheit reicht die USB-Verbindung zum Computer aus. Hiermit wird eine einfache komplett tragbare Vorrichtung bereitgestellt.

Die Analyseeinheit kann sowohl bereits aufgenommene und abgespeicherte Bilddateien als auch direkt Bilder von Substratproben über die angeschlossene Videoeinheit aufnehmen und abspeichern.

Weiterer Gegenstand der vorliegenden Erfindung ist eine optische Methode zur Ermittlung der Verteilung eines farb- und kontrastintensiven Beschichtungsmittels auf einem körnigen Substrat, bei der mit einer Videoeinheit ein farbiges Bild einer Substratprobe bestehend aus mehreren dicht aneinander liegenden Körnern, aufgenommen wird und mittels einer Software zur Bildanalyse des farbigen Bilds die Farbenverteilung auf individuellen Körner analysiert wird.

Die erfindungsgemäße Methode umfasst folgende Schritte:
1. Farbige Bildaufnahme einer beschichteten mehrkörnigen Substratprobe durch die Videoeinheit,
2. Übertragung der Bildaufnahme an die Bildanalyseeinheit,
3. Eingabe auf eine Eingabefläche der Bildanalyseeinheit von Substrat und Beschichtungsmittelfarbe F. Diese Beschichtungsmittelfarbe F kann entweder manuell in die Bildanalyseeinheit eingegeben werden oder durch Selektion eines Beschichtungsmittels auf der Eingabefläche aus einem Beschichtungsmitteldatenmodul der Bildanalyseeinheit extrahiert werden.
4. Ortdefinierte Extraktion der Farbinformation aus dem Bild mit Hilfe eines Computerprogramms, durch Vergleich der Farbe eines Punktes der Bildaufnahme mit einem Referenzwerte aus der Gruppe umfassend Beschichtungsmittelfarbe F, Referenzfarbe G des Substrats und / oder den Weißabgleich mit Hilfe der Software,
5. Fleckenerkennung auf einzelnen Körner des Komsubstrats aus dem Vergleich aus 4), und statistische Auswertung der Fleckenanzahl und -Fläche auf einzelnen Körner des Komsubstrats mit Hilfe des Computerprogramms und
6. Ausgabe der Fleckenverteilung auf den individuellen Korn auch "Patchniness" bezeichnet auf Basis der Fleckenanzahl aus eine Ausgabefläche der Bildanalyseeinheit.

In einer bevorzugten Ausführungsform der erfindungsgemäßen Methode werden außerdem folgende Schritte durchgeführt:
1. Statistische Auswertung der Fläche der anerkannten Flecken mit Hilfe des Computerprogramms und Ausgabe der Korn-zu-Korn Verteilung auch "evenness" genannt auf Basis der Fleckenfläche.

In einer bevorzugten Ausführungsform der erfindungsgemäßen Methode wird im Schritt 4 das Bild in Bereiche mittels eines Gitters mit vordefinierter Gittermasche unterteilt. Die Fläche eines Bereichs wird durch die Gittermasche für das zu untersuchende körnigen Substrat festgelegt. Üblicherweise beträgt die Gittermasche 20 bis 80 % eines Korns, vorzugsweise 40 bis 60 %, besonders bevorzugt 50 % eines Korns. Die optimale Gittermasche für das zu untersuchende körnigen Substrat kann entweder in die Bildanalyseeinheit eingegeben oder durch die Selektion eines Substrats auf der Eingabefläche aus einem Substratdatenmodul der Bildanalyseeinheit extrahiert werden. Typischerweise beträgt für Saatgut die Gittermasche von 1 mm x 1 mm bis 20 mm x 20 mm.

Üblicherweise wird im Schritt 4 die Farbinformation im Rot-Grün-Blau-Modell (RGB Farbmodell) des Farbraums extrahiert. Vorzugsweise wird hierfür die Rot-Grün-Blau-Information mit dem Weißabgleich verglichen.

Im Schritt 5 wird vorzugsweise die extrahierte Rot-Grün -Blau-Information in HSI-Information (Hue, Saturation, Intensity Farbmodell) konvertiert, in dem der Farbton als Farbwinkel H auf einem Farbkreis charakterisiert wird. Diese Konversion erfolgt nach einer bereits bekannten Methode (siehe z. B. http://de.wikipedia.org/wiki/HSI-Farbmodell). Im Schritt 5 werden vorzugsweise nur die Punkte selektiert, deren Farbwinkel H sich zwischen zwei Schwellen befindet und die Beschichtungsmittelfarbe F entspricht. Aus dieser Selektion werden anhand der Position der selektierten Punkte Kontur und Fläche der Flecken erkannt (Blob Detektion, siehe http://en.wikipedia.org/wiki/Blob_detection). Die Anzahl der Flecken und deren Fläche werden berechnet.

Optional wird für jeden Bereich ein HSI-Farbenhistogramm ermittelt.

Bei der statistischen Auswertung nach Schritt 5 entspricht eine geringe Fleckenanzahl pro Bereich zusammen mit einer hohen Fleckenfläche pro Bereich eine regelmäßige Verteilung des Beschichtungsmittels (gute Patchiness). Eine hohe Fleckenanzahl mit einer hohen Fleckenfläche verrät eine starke aber schlecht verteilte Beschichtung des Substrats (schlechte/hohe Patchiness).

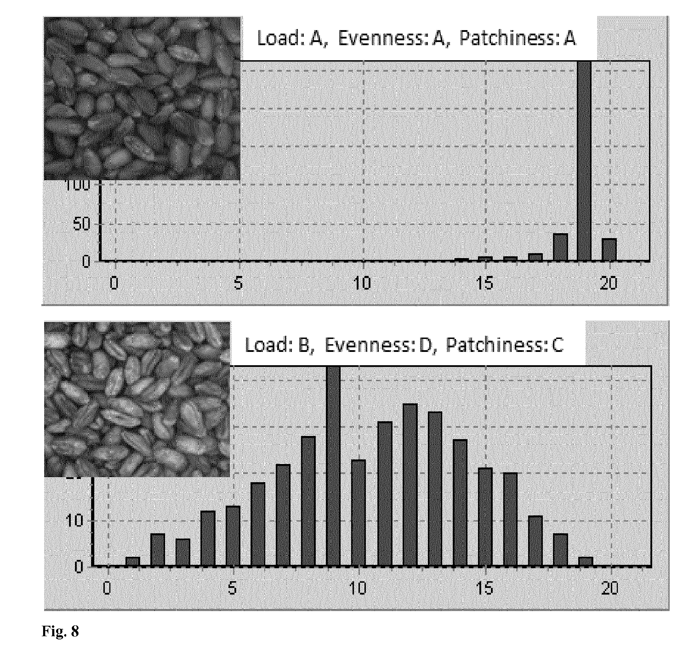

Im Schritt 7 wird aus allen Fleckenflächen pro Bereich ein neues Histogramm für das komplette Bild erstellt. Hierfür werden üblicherweise die genau ermittelten Flächenwerte in 5 % abständigen Bereiche abgerundet. Fig. 8 zeigt ein solches Histogramm der % Fleckenfläche zur Bereichsfläche. Die Gesamtfläche des Histogramms verrät die beschichtete Menge (=Load). Ist die Histogrammfläche groß ist das Load gut; eine niedrige Histogrammfläche verrät eine schlechte Beschichtung (schlechtes Load= geringe beschichtete Menge). Eine starke Streuung des Histogramms verrät eine schlechte Eveness der Beschichtung über die Gesamtprobe.

Mit der erfindungsgemäßen Methode können für eine Substratprobe nicht-invasiv mit einem minimalen Aufwand Statistiken über erstens die Korn-zu-Korn (Gesamt-)Verteilung und zweitens die Verteilung auf den individuellen Körnern erstellt werden. Die beiden statistischen Parameter werden als "Evenness" und "Patchiness" bezeichnet.

Vorzugsweise wird zusätzlich die prozentuale Gesamtbedeckung inklusive Durchschnittswert der Kornoberfläche durch das Beizmittel ermittelt und als "Load" und "Ave" angegeben. Die mit der Erfindungsmethode ermittelten Qualitätswerte ermöglichen eine detaillierte reproduzierbare Qualitätsbewertung des Beschichtungsvorgangs.

Die erfindungsgemäße Vorrichtung ist insbesondere für die Qualitätssicherung von Saatgut Beizungen mit Pflanzenschutzformulierungen, speziell an Getreide, anwendbar. Die Qualitätssicherung wird durch eine Farbanalyse mit optischer Detektion erreicht. Für eine zuverlässige Aussage muss ein ausreichender Farb- und Intensitätskontrast der Formulierung relativ zum Saatgut gewährleistet sein. Auch ein möglichst hoher Deckungsgrad der Formulierung ist vorteilhaft. Messungen mit der erfindungsgemäßen Vorrichtung und Methode erfolgen erst nach vollständiger Trocknung der aufgetragenen Formulierung, da die Farbe erst dann stabil ist und das Gerät nicht wasserdicht bzw. spritzwassergeschützt ist.

Eine weitere Anwendung der erfindungsgemäßen Vorrichtung ist für die optische Kontrolle einer Saatgutprobe in Bezug auf weitere farb- und kontrastintensive Befleckung wie z. B. durch Pilze verursachte Befleckung.

Beschichtungsmittel im Sinne der vorliegenden Erfindung ist daher ein Beschichtungsmaterial, Beizungsmittel oder anderes befleckendes Material, das im Vergleich zum Substrat farb- und kontrastintensiv ist.

Beschichtungsmittel mit rel. zum Substrat geringerem Farb- und Intensitätsunterschied unter weißen Lichtbedingungen können durch Optimierung der Beleuchtung, insbesondere der Zusammensetzung der Wellenlänge des Beleuchtungslichts ebenfalls detektiert werden.

Die Bedienung der Bilderanalyseeinheit wird in dem folgenden Beispiel exemplarisch dargestellt, ohne sich darauf zu begrenzen.

### Figuren:

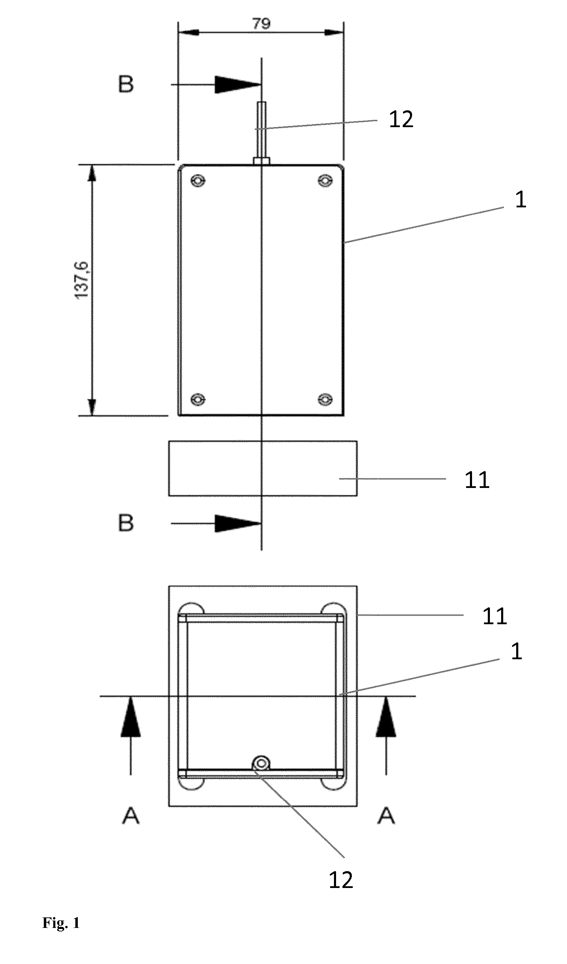

Fig 1 zeigt eine schematische Darstellung der erfindungsgemäßen Videoeinheit (seitlich und von oben

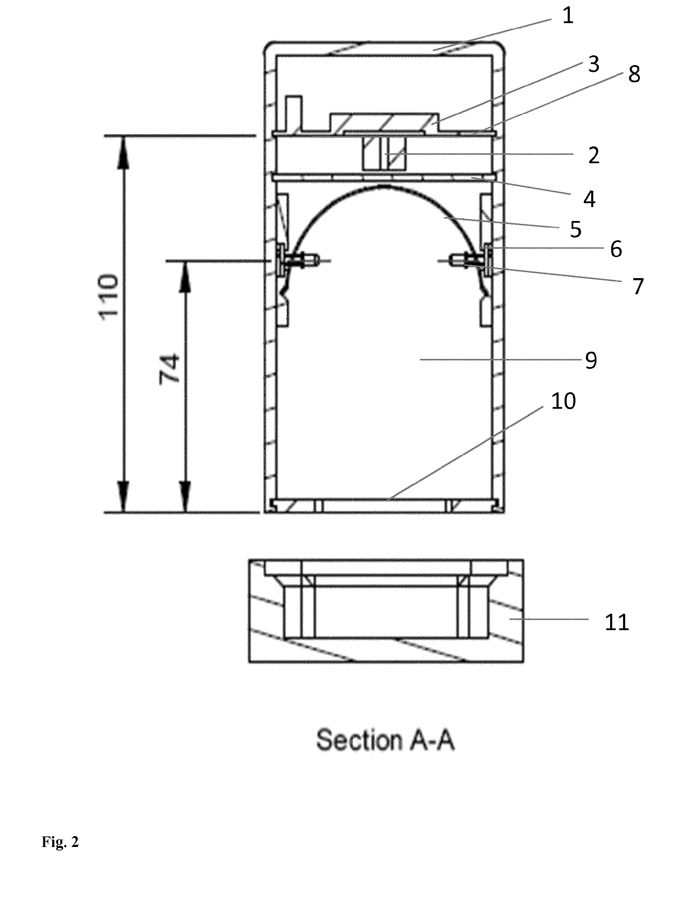

Fig. 2 zeigt das Innere des Gehäuses Sektion A-A

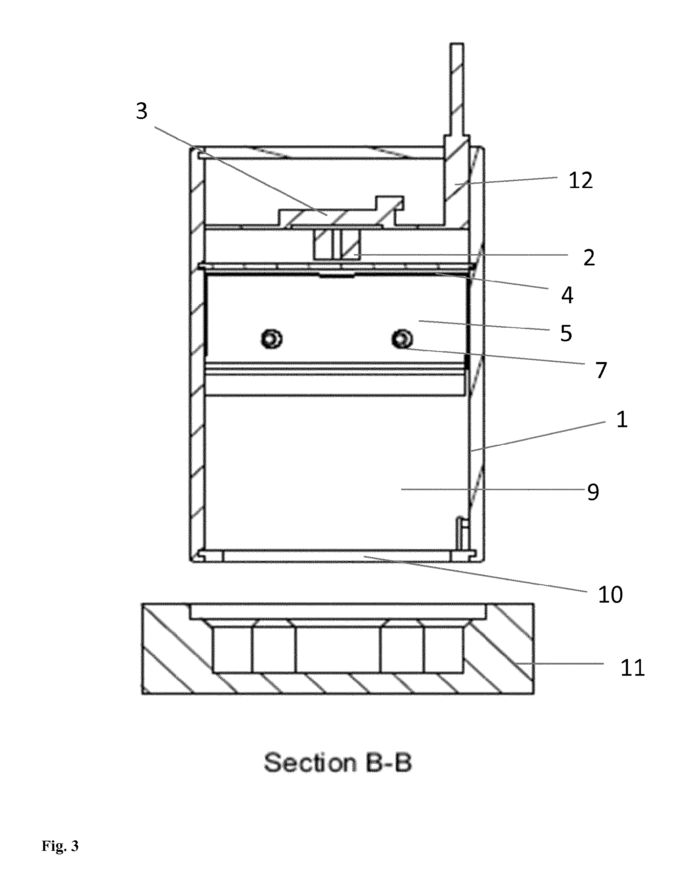

Fig. 3 zeigt das Innere des Gehäuses Sektion B-B bei einem zylindrischen Metallreflektor

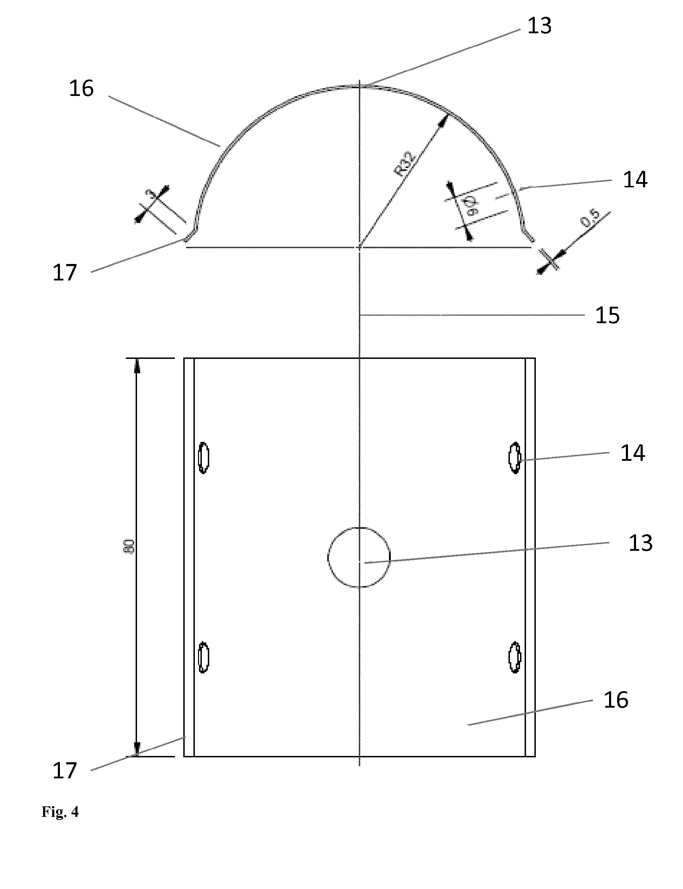

Fig 4a und 4b zeigen den Aufbau des zylindrischen Reflektors als Querschnitt und von Unten

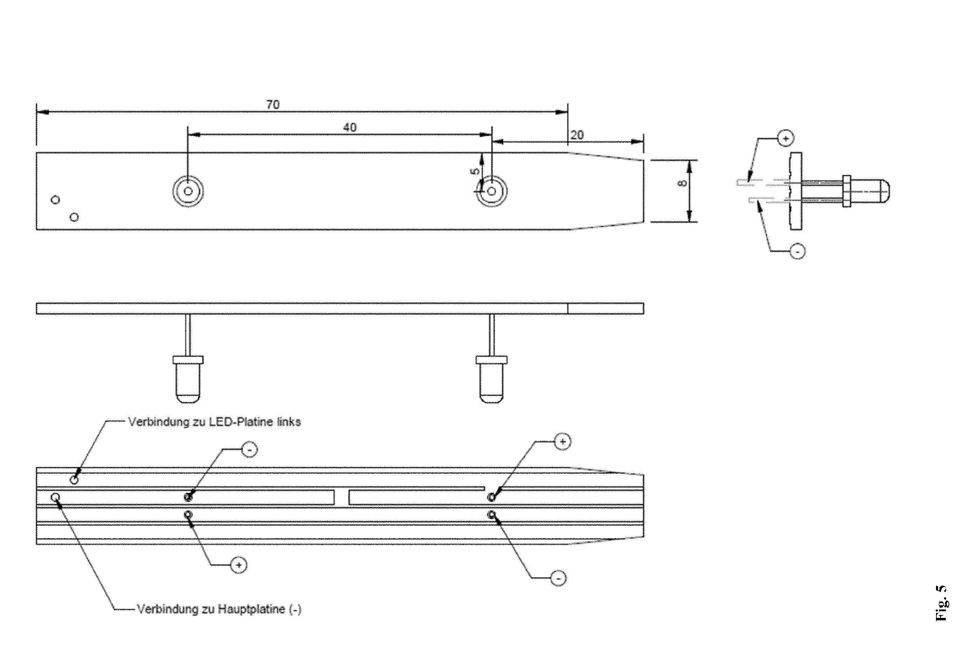

Fig. 5 zeigt der Aufbau der Diodenplatinen
Fig. 6 zeigt der Aufbau der Hauptplatine (Schaltplan) und deren Bauteilliste
Fig. 7 zeigt die Bildaufnahme einer Saatgutprobe in einer Petrischale, die im Schaleaufnahmeelement der Videoeinheit platziert wird
Fig. 8 zeigt ein Farbhistogramm "Color Distribution Statistics" grafisch dargestellt
Fig. 9 zeigt das Ausgabe-Hauptformular

### Bezugszeichen:

1. Gehäuse der Videoeinheit
2. Kamerakörper und -optik
3. Platte (oder Hauptplatine?)
4. Kameraschutzplatte
5. Reflektor
6. Diodeplatine
7. Leuchtdiode
8. Hauptplatine
9. Beleuchtungskammer
10. Bildaufnahmefenster
11. Schaleaufnahmelement
12. USB-Kabel
13. Kamerabohrung
14. Diodebohrung
15. Reflektoraxe
16. Reflektorwölbung
17. Reflektoranschluss

### Beispiel

Die Bildanalyseeinheit dient in dem folgenden Beispiel sowohl zur Steuerung der Videoeinheit als auch für die Durchführung der Bildanalyse des aufgenommen Farbbilds.

Die Reihenfolge der einzelnen Aktionen durch eine Nummerierung von 1) bis 7) gekennzeichnet, das erleichtert die Bedienung (siehe Bild).

Im Folgenden werden die einzelnen Schritte im Detail erläutert.
1) "Select the drive": Auswahl des Laufwerks in dem die aufgenommenen Bilder des der Videoeinheit kopiert werden, das Verzeichnis wird im nächsten Schritt festgelegt
2) "Select the image path": Auswahl des Verzeichnisses in das die Bilder der Videoeinheit kopiert werden
3) "Select seed": Auswahl der Saatgut. In dem folgenden Beispiel wurde Weizen ausgewählt.
4) "Select color": Auswahl der Beschichtungsmittelfarbe F des Beizmittels, Standard ist rot
5) "Select the image(s)": Auswahl der zu prüfenden Saatgut-Bilder. Zwei Optionen stehen zur Auswahl:
   a. "From File": es können mehrere, bereits aufgenommene Bilder ausgewählt werden. Das erste Bild wir durch Mausklick markiert, jedes weitere Bild durch Mausklick bei gleichzeitiger Betätigung Der Steuerungstaste ("Strg" oder "Ctrl")
   b. "From camera": hier kann das Bild einer Saatgut Probe über der angeschlossenen Videoeinheit aufgenommen und gespeichert werden, diese Funktion wird im nächsten Abschnitt detailliert beschrieben.
6) "Press button": Die Taste "Compute" startet die Analyse der zuvor markierten Bilder und überträgt die Ergebnisse in die Tabelle. Dieser Punkt entfällt bei Aufnahmen von Bildern mit der Videoeinheit (siehe nächsten Abschnitt)
7) "Results": In dieser Liste werden die Ergebnisse tabellarisch angezeigt. Eine detaillierte Beschreibung erfolgt im übernächsten Abschnitt. Über die Taste "Clear List" kann die Liste jederzeit gelöscht werden
8) "Copy data to clipboard": Kopiert die Tabelle in die Zwischenablage. Die Daten können anschließend weiterverarbeitet werden.

### Bilder von Saatgut Proben aufnehmen

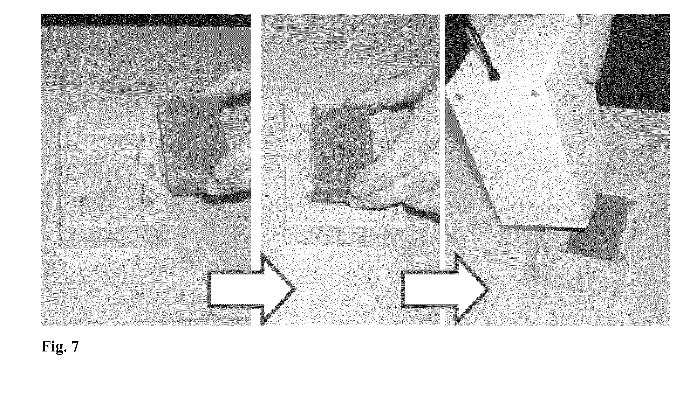

Die Bildaufnahme und -Auswertung einer neuen Saatgut Probe kann mit der Videoeinheit auf zwei Arten erfolgen:
a. Videoeinheit auf die ebene Saatgutoberfläche einer Saatgut Probe auflegen,
b. Saatgutprobe in eine Petrischale einfüllen, wobei die Schale bis zum Rand gefüllt wird und diese dann in das Schaleaufnahmeelement der Videoeinheit einlegen. Zuletzt wird die Bildaufnahmekammer auf die Schaleaufnahmelement aufgesetzt (Fig. 7)

In beiden Fällen wird im Anschluss ein Bild der Saatgutprobe aufgenommen. Dazu wird im Programm der Reiter "From camera" (Punkt 4) gewählt:
Nach der Eingabe eines Dateinamens wird ein neues Bild der Saatgut Probe durch Betätigen von "New frame" aufgenommen; das Bild wird in das unter Punkt 2) ausgewählte Verzeichnis gespeichert. Die Angabe der Dateierweiterung ist nicht erforderlich, die Software speichert alle Bilder im unkomprimierten Bitmap Format.

Schließlich wird das Bild nach der erfindungsgemäßen Methode analysiert und ausgewertet und das Ergebnis der Analyse in die Tabelle übertragen.

### Bilderanalyse:

a) Ortdefinierte Extraktion der Farbinformation aus dem Bild als Rot- Grün-Blau-Information. Für die ortsdefinierte Extraktion der Farbinformation wurde das Bild der Weizenprobe in Bereiche mittels eines Gitters mit Gittermasche derGröße von 4 mm x 4 mm (50 % des Saatgutsgröße) unterteilt.
b) Dann wurde Rot-Gelb-Blau-Informationen in HSI-Informationen konvertiert ein Farbenhistogramm für jeden Bereich ermittelt. Die Punkte wurden selektiert, deren Farbwinkel H größer als der Winkel der Beschichtungsmittelfarbe F ist. Aus dieser Selektion wurden anhand der Position der selektierten Punkte für jeden Bereich Konture der Flecken erkannt und Fläche der Flecken berechnet. Auch die Anzahl der Flecken wurden ermittelt. Diese Werte werden zu Bewertung der Patchiness verwendet.

Für die Ermittlung des Beizgrads / Eveness wurden die Fleckenflächen pro Bereich aufsummiert und ein neues Histogramm wurde für das komplette Bild erstellt. Hierfür wurden die genau ermittelten Flächenwerte in 5 % abständigen Bereiche abgerundet.

### Ausgabe der Analyse:

Die erste Spalte der Ergebnistabelle enthält stets den Namen der Bilddatei, die weiteren sechs Spalten das Ergebnis der Analyse. Üblicherweise werden aus der Analyse folgende Parameter ermittelt:
- "Ave": Mittlerer Bedeckungsgrad des Saatguts durch das Beizmittel, angegeben als %-Wert der sichtbaren Saatgut-Fläche
- "Std. Dev." (= Standard Deviation): Standardabweichung des mittleren Bedeckungsgrads (Ave), angegeben als %-Wert der sichtbaren Saatgut-Fläche
- "Max" (=Max Load) Maximaler Beizgrad einzelner Saatgut-Körner, angegeben als %-Wert der sichtbaren Saatgut-Fläche
- "Load": Beizgrad, ermittelt durch Farbanalyse der Probe. Angegeben als Textskala von "A" für sehr hohen bis "H" für sehr schlechten Beizgrad
- "Evenness": Maß für die Korn- zu Korn Verteilung der Beizung ("Gleichmäßigkeit"). Angegeben als Textskala von "A" für sehr gleichmäßige bis "H" für extrem ungleichmäßige Beizung.
- "Patchiness": Maß für die Verteilung des Beizmittels einzelner Körner ("Lückenhaft", "Spots"). Angegeben als Textskala von "A" für sehr homogene bis "H" für extrem lückenhafte Beizung (einzelne Spots).

Die statistische Verteilung des Beizmittels wird im Diagramm "Color Distribution Statistics" grafisch dargestellt (Siehe Fig 8). Fig. 8 zeigt ein solches Histogramm die % Fleckenfläche zur Bereichsfläche. Die Gesamtfläche des Histogramms verrät die beschichtete Menge (=Beizgrad). Wenn die Histogrammfläche groß ist, ist der Beizgrad gut; eine niedrige Histogrammfläche verrät eine schlechte Beschichtung (schlechter Beizgrad= geringe beschichtete Menge). Eine starke Streuung des Histogramms verrät eine schlechte Eveness der Beschichtung über die Gesamtprobe.

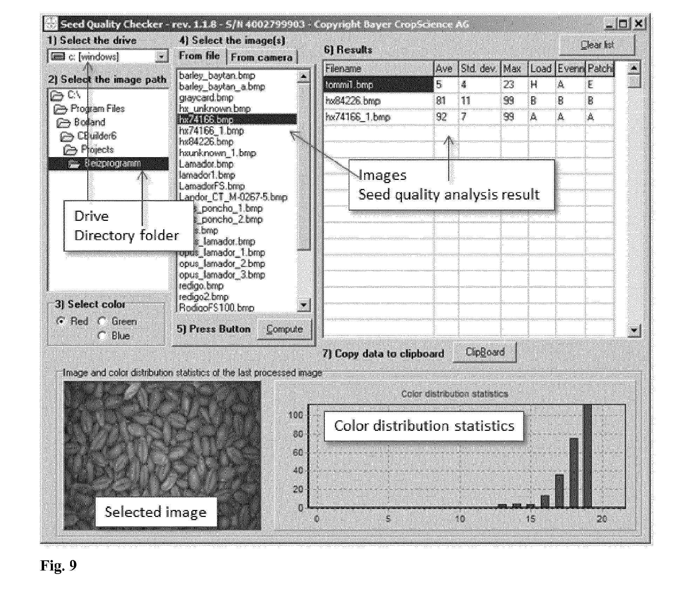

Fig. 9 zeigt das Ausgabe-Hauptformular für die Ausgabe der relevanten Qualitätswerte und graphische Darstellung.

## Patentansprüche

1. Vorrichtung zur farbigen Bildaufnahme und -analyse einer Substratprobe bestehend aus mehreren dicht aneinander liegenden Körnern, umfassend:
a. eine tragbare Videoeinheit umfassend eine Farbvideokamera, Leuchtmittel und ein lichtdicht abgeschlossenes Gehäuse zur Befestigung von Farbvideokamera und Leuchtmittel, wobei die Videokamera auf ein Aufnahmefenster in das Gehäuse gerichtet ist,
b. eine Bildanalyseeinheit, die mit der Videoeinheit verbunden ist und, in der ein Computerprogramm zur Farbverteilungsanalyse der farbigen Bildaufnahme installiert ist.

2. Vorrichtung nach Anspruch 1, wobei die Leuchtmittel eine reflektierende Fläche und eine oder mehrere Lichtquellen umfassen.

3. Vorrichtung nach Anspruch 2, wobei die reflektierende Fläche ein konkaven matt-weiß beschichteten Reflektor, mit einer zentralen Bohrung für das Objektiv der Kamera ist.

4. Vorrichtung nach Anspruch 3, wobei der Reflektor die Form eines halbzylindrischen Doms oder einer Halbkugel aufweist.

5. Vorrichtung nach einem der Ansprüche 1 bis 4, wobei die Leuchtmittel eine oder mehrere Leuchtdioden als Lichtquellen umfassen.

6. Vorrichtung nach einem der Ansprüche 2 bis 5, wobei dem Substrat gegenüberliegenden Seite der Lichtquellen lichtabsorbierend beschichtet ist.

7. Optische Methode zur Ermittlung der Verteilung eines farb- und kontrastintensiven Beschichtungsmittels auf einem körnigen Substrat, bei der mit einer Videoeinheit ein farbiges Bild einer Substratprobe bestehend aus mehreren dicht aneinander liegenden Körnern, aufgenommen wird und mittels eines Computerprograms zur Bildanalyse des farbigen Bilds die Farbenverteilung auf individuellen Körner analysiert wird.

8. Methode nach Anspruch 7 umfassend folgende Schritte:
a. Farbige Bildaufnahme einer beschichteten mehrkörnigen Substratprobe durch die Videoeinheit,
b. Übertragung der Bildaufnahme an die Bildanalyseeinheit,
c. Eingabe auf eine Eingabefläche der Bildanalyseeinheit von Substrat und Beschichtungsmittelfarbe F.
d. Ortdefinierte Extraktion der Farbinformation aus dem Bild mit Hilfe der Software, durch Vergleich der Farbe eines Punktes der Bildaufnahme mit einem Referenzwerte aus der Gruppe umfassend Beschichtungsmittelfarbe F, Referenzfarbe G des Substrats und / oder den Weißabgleich mit Hilfe der Software,
e. Fleckenerkennung auf einzelnen Körner des Komsubstrats aus dem Vergleich aus d), und statistische Auswertung der Fleckenanzahl und -fläche auf einzelnen Körner des Komsubstrats mit Hilfe der Software und
f. Ausgabe der Fleckenverteilung auf den individuellen Korn auch "Patchniness" bezeichnet auf Basis der Fleckenanzahl.

9. Methode nach Anspruch 8 weiterhin umfassend die statistische Auswertung der Fläche der anerkannten Flecken mit Hilfe des Computerprograms und Ausgabe der Korn-zu-Korn Verteilung auch "evenness" genannt auf Basis der Fleckenfläche.

10. Methode nach einem der Ansprüche 8 oder 9, wobei im Schritt d) das Bild in Bereiche mittels eines Gitters mit vordefinierter Gittermasche unterteilt wird.

11. Methode nach Anspruch 10, wobei die Gittermasche 20 bis 80 % eines Korns beträgt.

12. Methode nach einem der Ansprüche 8 bis 11, wobei im Schritt d) werden nur die Punkte selektiert werden, deren Farbwinkel H sich zwischen zwei Schwellen befindet und die Beschichtungsmittelfarbe F entspricht.

13. Methode nach Anspruch 12, wobei anhand der Position der selektierten Punkte Kontur und Fläche der Flecken berechnet werden.

14. Methode nach einem der Ansprüche 7 bis 13 zur optischen Kontrolle einer Saatgutprobe in Bezug auf farb- und kontrastintensive Befleckung oder Beschichtungsqualität mit einem farb- und kontrastintensiven Beschichtungsmittel.
